# EUROPÄISCHE PATENTANMELDUNG

(11) **EP 4 056 521 A1**
(43) Veröffentlichungstag der Anmeldung: **14.09.2022**
(21) Anmeldenummer: 22160019.0
(22) Anmeldetag: 03.03.2022
(51) Int. Cl.: B66F 9/075, B66F 9/065, B62B 3/06

(54) **FLURFÖRDERZEUG MIT MINDESTENS EINEM STÜTZRAD**

(30) Priorität: 10.03.2021 DE 102021105790
(71) Anmelder: Jungheinrich Aktiengesellschaft, 22047 Hamburg (DE)
(72) Erfinder: Schüler, Michael, 24558 Wakendorf II (DE); Lohmann, Helmut, 27404 Nartum-Gyhum (DE); Brunckhorst, Holger, 22844 Norderstedt (DE); Krenzin, Marcel, 24576 Bad Bramstedt (DE)
(74) Vertreter: Hauck Patentanwaltspartnerschaft mbB

(57) **Zusammenfassung**

Flurförderzeug (10) mit einem Antriebsteil (12) und einem Lastteil (14), der ein Lasttragmittel mit mindestens einem Lastrad (20) aufweist, wobei der Antriebsteil (12) einen Fahrzeugrahmen (48) aufweist, in dem ein lenkbares Antriebsrad (28) und mindestens ein Stützrad (30) angeordnet sind, wobei das mindestens eine Stützrad (30) auf der vom Lastteil (14) abgewandten Seite des Antriebsrades (28) angeordnet und als nachlaufendes Rad um eine Hochachse schwenkbar gelagert ist, wobei der Fahrzeugrahmen (48) eine mit dem mindestens einem Stützrad (30) korrespondierende Ausnehmung aufweist, wobei das mindestens eine Stützrad (30) bei einem von dem Lastteil (14) fortweisenden Nachlauf durch die Ausnehmung mindestens teilweise vorsteht.

## Beschreibung

Die vorliegende Erfindung betrifft ein Flurförderzeug, das mit mindestens einem Stützrad ausgestattet ist.

Bei Flurförderzeugen, und insbesondere bei Mitfahrflurförderzeugen, stützt sich der Lastteil des Flurförderzeugs über Lastrollen oder Lasträder ab. Die Lasträder sind in der Regel am Ende der Lastgabeln angeordnet. Der Antriebsanteil eines Flurförderzeugs ist mit einem lenkbaren Antriebsrad ausgestattet, über das das Flurförderzeug angetrieben und gelenkt wird. Zusätzlich ist vorgesehen, dass Stützräder an dem Antriebsanteil des Flurförderzeugs angeordnet sind, um ein Kippen des Fahrzeuges zur Seite, beispielsweise bei starker Beschleunigung und geringer Last, zu verhindern. Bei einem Kippen nach hinten, das bei ungünstiger Gesamtmassenverteilung auftreten kann, heben die Lasträder an der Gabelzinkenspitze ab.

Bei Mitfahrerfahrzeugen, die eine ausreichend schwere Batterie und/oder ein schweres Hubgerüst aufweisen, tritt das Problem des Kippens nach hinten nicht auf, da die Masse hinter dem Antriebsanteil ausreichend groß ist, um ein Anheben der Lasträder zu verhindern. Bei Niederhubfahrzeugen mit einer entsprechend leichten Batterie und insbesondere bei Mitfahrerfahrzeugen ohne Hubgerüst, kann es zu einem Abheben der Lasträder und einem Kippen nach hinten kommen.

Es ist bekannt, Stützräder an dem Antriebsteil vorzusehen. Nachteilig hierbei ist jedoch, dass der Bauraum begrenzt und ein Abstand zwischen Stützrad und Antriebsrad zu gering ist, um ein ausreichend großes Gegenmoment zu erzeugen. Ferner ist bekannt, die Gabelzinkenspitze mit Zusatzgewichten zu versehen. Jedoch steht auch in der Gabelzinkenspitze nur ein geringer Bauraum zur Verfügung zudem erzeugt ein Zusatzgewicht zusätzliche Kosten. Auch die Anbringung von zusätzlichen Gewichten an anderen Orten des Fahrzeugs, beispielsweise am oder im Batterieträger, erfordert aufgrund der Abstände große Gewichte, wodurch zusätzliche Kosten entstehen. Auch wurde vorgeschlagen, die Fahrgeschwindigkeiten bei Leerfahrten in Antriebsrichtung zu verringern, um so der Gefahr des Kippens nach hinten vorzubeugen. Ein solcher Eingriff in die Fahrzeugsteuerung reduziert jedoch die Performance des Fahrzeugs.

Der Erfindung liegt die Aufgabe zugrunde, bei einem Flurförderzeug mit möglichst einfachen Mitteln ein Kippen nach hinten über das Antriebsrad zu verhindern.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug besitzt die Merkmale aus Anspruch 1. Das Flurförderzeug besitzt einen Antriebsteil und einen Lastteil. Der Lastanteil ist mit einem Lasttragmittel, beispielsweise einem Paar von Gabelzinken, ausgestattet. Das Lasttragmittel besitzt mindestens ein Lastrad, das den Lastteil und damit auch den Antriebsteil abstützt. Der Antriebsteil des Flurförderzeugs weist einen Fahrzeugrahmen auf, in dem ein lenkbares Antriebsrad und mindestens ein Stützrad angeordnet sind. Das mindestens eine Stützrad ist auf der vom Lastteil abgewandten Seite des Antriebsrades angeordnet. Das Stützrad ist als ein nachlaufendes Rad um eine Hochachse schwenkbar angeordnet. Erfindungsgemäß ist vorgesehen, dass der Fahrzeugrahmen eine mit dem mindestens einen Stützrad korrespondierende Ausnehmung aufweist. Bevorzugt weist zumindest ein Rahmenteil des Fahrzeugrahmens eine entsprechende Ausnehmung auf, weiter bevorzugt ist das Rahmenteil als Blechteil ausgebildet, wobei die Ausnehmung bevorzugt als Ausschnitt in einem Rahmenteil ausgebildet ist. Das mindestens eine Stützrad steht bei einem von dem Lastteil fortweisenden Nachlauf durch die Ausnehmung in dem Fahrzeugrahmen vor. Im Stand der Technik begrenzen bei Flurförderzeugen der Fahrzeugrahmen die Anordnung des Stützrades, so gestattet die erfindungsgemäße Ausnehmung im Fahrzeugrahmen einen größeren Abstand zwischen Antriebsrad und Stützrad, was ein größeres, dem Kippen entgegenwirkendes Gegenmoment erzeugt. Besonders vorteilhaft ist hierbei, dass der Fahrwerkraum des Antriebsanteils nicht vergrößert werden muss, sondern dass das mindestens eine Stützrad durch die bisher übliche Begrenzung des Fahrwerks teilweise vorsteht.

In einer bevorzugten Weiterbildung ist das mindestens eine Stützrad mit einer horizontalen Drehachse und einer vertikalen Schwenkachse als Hochachse ausgestattet. Der Abstand zwischen horizontaler Drehachse und vertikaler Schwenkachse bildet den Nachlauf, dessen Richtung von der Schwenkachse fortweist.

In einer bevorzugten Ausgestaltung ist der Abstand zwischen vertikaler Schwenkachse und Fahrzeugrahmen kleiner als die Summe aus Nachlauf und halbem Stützraddurchmesser. Bevorzugt ist der Abstand größer als der Nachlauf. Dies bedeutet, dass die horizontale Drehachse des Stützrades innerhalb des Fahrzeugrahmens verbleibt, während ein weiter entfernt liegender Teil des Stützrades aus dem Fahrzeugrahmen vorsteht. Ist dagegen der Abstand größer als der Nachlauf, so tritt auch die horizontale Drehachse des Stützrades durch die Ausnehmung aus.

In einer bevorzugten Weiterbildung sind zwei Stützräder vorgesehen, deren Verbindungslinie quer zur Fahrzeuglängsachse steht. Bevorzugt besitzen die beiden Stützräder auch den gleichen Abstand zum Antriebsrad, so dass das abstützende Moment der Stützräder links und rechts gleich groß ist.

In einer bevorzugten Weiterbildung ist für jedes der beiden Stützräder eine Ausnehmung in dem Fahrzeugrahmen vorgesehen. Zwei räumlich begrenzte Ausnehmungen schwächen den Fahrzeugrahmen nur geringfügig, so dass die Stützräder durch die jeweilige Ausnehmung vorstehen können.

In einer bevorzugten Weiterbildung weist der Fahrzeugrahmen ein quer zur Fahrzeuglängsrichtung stehendes Begrenzungsblech auf, in dem die mindestens eine Ausnehmung vorgesehen ist. Das Begrenzungsblech kann als ein in den Fahrzeugrahmen eingesetztes Blech ausgebildet sein. Bei einem insgesamt einstückig ausgebildeten Fahrzeugrahmen kann das Begrenzungsblech auch einen Abschnitt des Fahrzeugraums bezeichnen, ohne dass es als ein separates Bauteil vorliegt. Auch weitere Bauteile, die an dem Fahrzeugrahmen angrenzen, können eine ergänzende Ausnehmung aufweisen, um die Schwenkbarkeit des Stützrades zu ermöglichen.

In einer bevorzugten Weiterbildung ist das Begrenzungsblech aufrecht in dem Fahrzeugrahmen angeordnet und besitzt eine bodennahe untere Kante. Die bodennahe untere Kante kann beispielsweise einen Abstand vom Untergrund besitzen, der der Bodenfreiheit des Antriebsteils entspricht.

In einer bevorzugten Ausgestaltung weist der Fahrzeugrahmen ein Querblech auf, in dem die mindestens eine Ausnehmung vorgesehen ist. Das Querblech ist bevorzugt auf der von dem Lastteil fortweisenden Seite des Begrenzungsblechs angeordnet. Zweckmäßigerweise bilden Begrenzungsblech und Querblech einen rechten Winkel miteinander, wobei die Ausnehmung sich dann über beide Bleche erstreckt. Das Querblech kann auch unabhängig von dem Begrenzungsblech als ein Teil des Fahrzeugrahmens vorgesehen sein und die entsprechende Ausnehmung aufweisen.

In einer bevorzugten Weiterbildung weist der Antriebsteil eine um eine horizontale Achse schwenkbare Trittplattform auf, wobei das Begrenzungsblech das zur Trittplattform weisende Ende des Fahrzeugrahmens bildet. Hierbei handelt es sich um ein Mitfahrerfahrzeug, dass zum Mitfahren dem Fahrer die Möglichkeit bietet, die Trittplattform auszuklappen und sich auf diese zu stellen.

In einer alternativen Ausgestaltung weist das Antriebsteil eine Fahrerstandfläche auf. In diesem Fall ist das Begrenzungsblech in dem Fahrzeugrahmen an dem zum Lastteil weisenden Ende der Fahrerstandplattform angeordnet. Der Antriebsteil des Flurförderzeugs mit einer Fahrerstandplattform kann in zwei Teile unterteilt werden, beispielsweise einen vorderen Fahrwerkabschnitt und einen hinteren Standabschnitt. Die Grenze zwischen den beiden Abschnitten wird von dem Begrenzungsblech gebildet.

In einer bevorzugten Weiterbildung ist das mindestens eine Stützrad als Bockrolle ausgebildet. Es können ein, zwei oder mehr Stützräder vorgesehen sein, wobei bei der Verwendung von zwei Stützrädern diese an einer Koppelschwinge angeordnet sein können. Die Koppelschwinge koppelt die Bewegung der beiden Stützräder. Zudem kann die Koppelschwinge auch abstützende, seitlich stabilisierende Stützmomente für das Fahrzeug aufbauen.

Die Erfindung wird nachfolgend anhand von Figuren näher erläutert.
- Figur 1: zeigt ein Niederhubflurförderzeug mit einer Fahrerstandplattform in einer perspektivischen Ansicht von vorne,
- Figur 2: zeigt das Fahrzeug aus Figur 1 in einer Ansicht von der Seite, wobei ein Blick auf Antriebsrad und Stützräder freigelegt ist,
- Figur 3: zeigt den Fahrzeugrahmen des Fahrzeugs aus Figur 1 in einer Ansicht von unten,
- Figur 4: zeigt den Fahrzeugrahmen aus Figur 3 mit eingesetzten Rädern,
- Figur 5: zeigt einen Blick auf den Fahrzeugrahmen mit Fahrerstandplattform,
- Figur 6: zeigt den Antriebsteil für ein Niederhubflurförderzeug mit einer klappbaren Trittplattform,
- Figur 7: zeigt eine perspektivische Ansicht auf den Fahrzeugrahmen von unten,
- Figur 8: zeigt den Fahrzeugrahmen aus Figur 7 mit Rädern, und
- Figur 9: zeigt den Fahrzeugrahmen mit einem Blick auf das Antriebsrad.

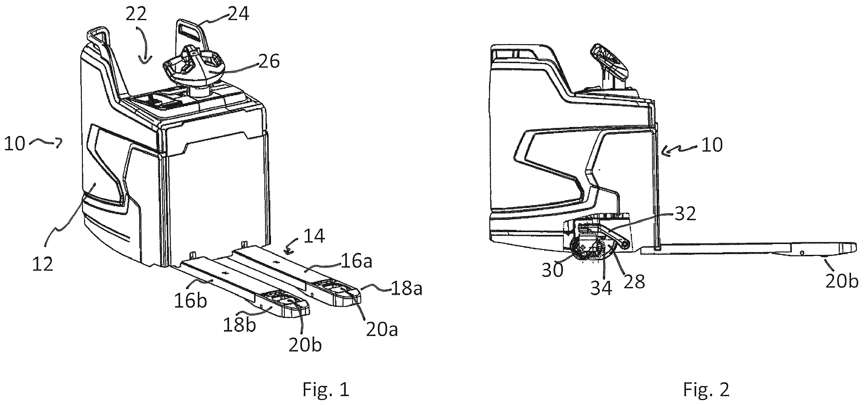

Figur 1 zeigt ein Niederhubflurförderzeug 10 mit einem Antriebsteil 12 und einem Lastteil 14. Der Lastteil 14 besitzt als Lasttragmittel zwei parallel zueinander verlaufende Gabelzinken 16a, 16b, diejeweils eine Gabelspitze 18a, 18b besitzen. Die Gabelspitzen 18 sind massiv ausgebildet, um Beschädigungen beim Aufnehmen und Absetzen von Lasten zu vermeiden. Jede der Gabelspitzen 18 ist mit einer Lastrolle 20a, 20b ausgestattet. Die Lastrollen 20, die auch als Lasträder ausgebildet sein können, dienen dazu, für einen Initialhub die Lastgabeln 16 anzuheben und diese wieder abzusetzen.

Der Antriebsteil 12 besitzt eine Fahrerstandplattform 22, auf die sich ein mitfahrender Fahrzeugführer stellen kann. Von einer Fahrerstandplattform hat der Fahrzeugführer Zugriff auf das nach Art eines Lenkrades ausgebildete Bedienelement 26. Mit dem Bedienelement 26 wird das Fahrzeug in seiner Funktion gelenkt. Neben dem Bedienelement 26 kann der Fahrer auch seitliche Griffelemente 24 ergreifen.

Figur 2 zeigt das Flurförderzeug 10 in einer Ansicht von der Seite, wobei das Antriebsrad 28 zur besseren Übersicht freigelegt ist. Das ganze Fahrzeug wird, bezogen auf die Fahrzeuglängsrichtung, durch die Lastrollen 20 und das Antriebsrad 28 abgestützt. Bei einer ungünstigen Gewichtsverteilung und einem von außen angreifendem Moment, wie beispielsweise an einer Rampe, kann die Situation auftreten, dass das Fahrzeug über das Antriebsrad 28 nach hinten kippt, wobei die Lastrollen 20 dann die Bodenhaftung verlieren. Ein solches, das Fahrzeug nach hinten kippendes Moment, kann statisch oder dynamisch entstehen.

Figur 2 zeigt ebenfalls ein Stützrad 30, das an einer Koppelschwinge 32 gelagert ist. Das Stützrad 30 ist als Bockrolle ausgebildet, die mit ihrem Nachlauf sich entsprechend der Fahrrichtung des Fahrzeugs ausrichtet. Grundsätzlich kann es je nach Bauweise des Fahrzeugs auch genügen, wenn nur ein Stützrad vorgesehen ist. Bewegt sich das Fahrzeug in Richtung seines Lastteils, so richtet sich der Nachlauf des Stützrades derart aus, dass das Stützrad mit seiner horizontalen Drehachse einen großen Abstand gegenüber dem Antriebsrad besitzt. Dies vergrößert das durch das Stützrad aufgebrachte Stützmoment. Fährt das Fahrzeug in Richtung seines Antriebsanteils, so wechselt die Orientierung des Nachlaufs und das gestrichelt dargestellte Stützrad 34 befindet sich näher am Antriebsrad 28.

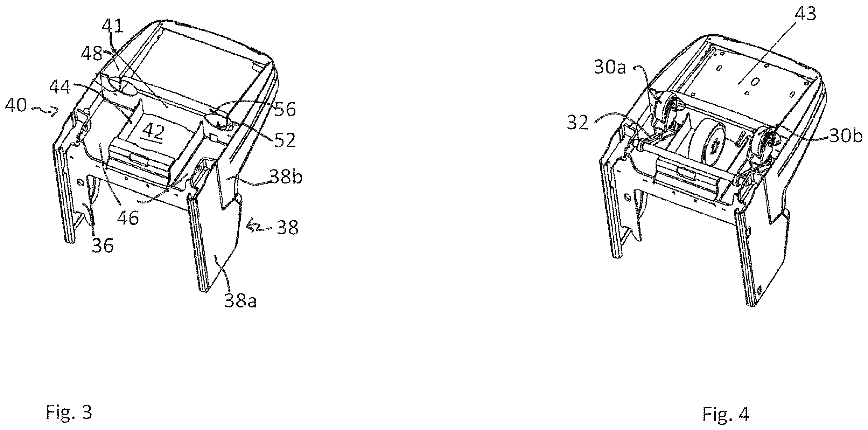

Figur 3 zeigt den Fahrzeugrahmen in einer perspektivischen Ansicht von unten. Der Fahrzeugrahmen besitzt eine Vorderwand 36, die einen Übergang zum Lastteil bildet. Die Seitenwände 38 und 40 erstrecken sich in Fahrzeuglängsrichtung und begrenzen den Antriebsteil seitlich. Die Seitenwände 38, 40 können einstückig ausgebildet sein oder, wie in dem vorstehenden Beispiel, aus zwei Seitenwandabschnitten 38a und 38b zusammengesetzt sein. Miteinander verbunden sind die Seitenwände durch ein Begrenzungsblech 41, das vertikal stehend zwischen den Seitenwänden 38 und 40 angeordnet ist. Das Begrenzungsblech 41 grenzt eine Öffnung 42 ab, in der das Antriebsrad angeordnet ist. Angrenzend an die Öffnung 42 sind Seitenbleche 44 und Bodenbleche 46 vorgesehen, die den Fahrzeugrahmen zusätzlich stabilisieren. Auf der von dem Lastteil fortweisenden Seite des Begrenzungsblechs 41 befindet sich ein Rahmen 48, der die Fahrerstandplattform aufnimmt.

Figur 3 zeigt zwei Ausnehmungen in Form von Ausschnitten 50, 52 in dem Begrenzungsblech 41. Die Ausschnitte 50, 52 besitzen eine ovale Form, wobei die Ausschnitte ihre größte Breite an der unteren Kante des Begrenzungsblechs 41 besitzen. Jeweils korrespondierend zu den Ausschnitten 50, 52 in dem vertikal stehenden Begrenzungsblech sind auch Ausschnitte 54, 56 in dem horizontal angeordneten Rahmen 48 für die Fahrerstandplattform vorgesehen. Auch die horizontalen Ausschnitte 54, 56 besitzen eine ovale Kontur. Die Geometrie der Ausschnitte 50 und 54 bzw. 52, und 56 ist so festgelegt, dass eine Stützrolle in dem jeweiligen Paar von Ausschnitten verschwenken kann.

Figur 4 zeigt die beiden Stützräder 30a, 30b, wie sie mit einem Teil ihres Rades in die Ausschnitte vorsteht. Da das Begrenzungsblech 41 und der Rahmen für den Fahrerstandplatz 48 unter einem rechten Winkel aufeinanderstoßen, entspricht die insgesamt gebildete Ausnehmung einem ovalen Gebilde, gerade so, als würde eine Ellipse entlang ihrer großen Achse um 90° gefaltet werden.

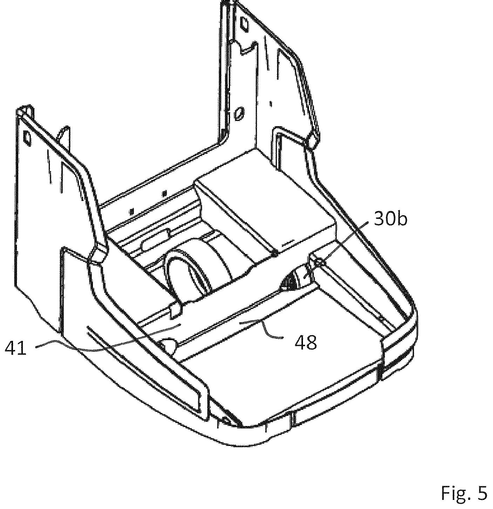

Deutlich wird die Geometrie auch in Figur 5, in der das Stützrad 30b zu erkennen ist, das durch die Ausnehmung teilweise vorsteht.

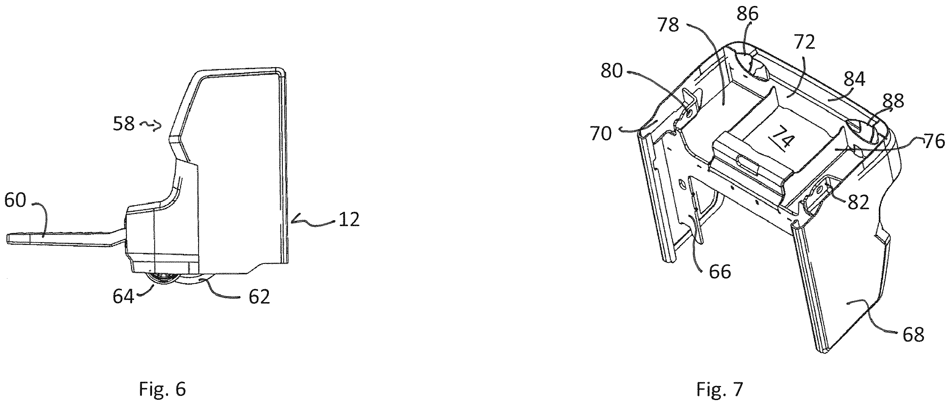

Figur 6 zeigt den Antriebsteil 58 für ein Niederhubfahrzeug mit einer klappbaren Trittplattform 60, die zur Benutzung durch den Fahrer heruntergeklappt ist. Der Antriebsteil 58 besitzt ein Antriebsrad 62 und ein Stützrad 64.

Figur 7 zeigt den Aufbau des Fahrzeugrahmens, der strukturell dem in Figur 3 beschriebenen Aufbau entspricht. Zu erkennen ist eine Vorderwand 66, die zur Anbindung an den Lastteil vorgesehen ist. Die Rahmenaußenwände 68, 70 besitzen einen ähnlichen Aufbau wie bei dem Fahrzeug mit der Fahrerstandplattform, sind allerdings kürzer in Bezug auf die Fahrzeuglängsrichtung. Die Rahmenaußenwände 68, 70 sind durch ein Begrenzungsblech 72 miteinander verbunden. An das Begrenzungsblech 72 schließt sich die Öffnung 74 für das Antriebsrad (nicht dargestellt) an. Die Öffnung 74 wird seitlich begrenzt durch die Seitenbleche 76 und das Bodenblech 78. Ebenfalls zu erkennen ist die Halterung 80, 82 für die Koppelschwinge (nicht dargestellt). An das Begrenzungsblech 72 schließt unter einem rechten Winkel ein horizontales Querblech 84 an. Bei der Ausführungsform nach den Figuren 1 bis 5 war dieses horizontale Querblech Teil des Rahmens, der die Fahrerstandplattform trägt. Bei der Ausgestaltung nach den Figuren 6 bis 9, in der keine Fahrerstandplattform vorgesehen ist, ist das horizontale Querblech 84 aus Gründen der Stabilität vorgesehen. Zudem vereinfacht das horizontale Querblech 84 die Anbringung der klappbaren Trittplattform 60.

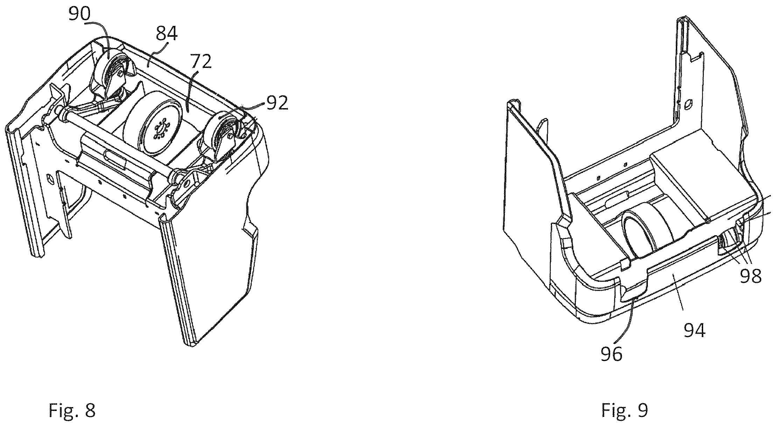

Figuren 7 und 8 zeigen die jeweilige Ausnehmung in der Begrenzungswand 72 und dem horizontalen Querblech 84. Die Ausnehmungen 86 und 88 besitzen als Ausschnitte eine ovale Form, durch die ein Teil des Stützrades vorsteht. Die Stützräder 90, 92 sind in Figur 8 in ihrer vorstehenden Position gezeigt, in der der Nachlauf von dem Antriebsrad fortweist.

Figur 9 zeigt den Fahrzeugrahmen mit einer Schürze 94. Die Schürze 94 besitzt zwei Ausschnitte 96, 98, über die die Trittplattform 60 an dem Fahrzeugrahmen klappbar angelenkt ist.

Hinsichtlich der Abmessung der Ausschnitte 86, 88 ist zu unterscheiden, ob die Stützräder gefedert oder nicht gefedert ausgebildet sind. Handelt sich um gefederte Stützräder, so müssen die Ausnehmungen entsprechend größer dimensioniert werden, damit das in die Ausnehmung verschwenkte Stützrad noch seinen vorgesehenen Federweg zurücklegen kann. Bei nichtgefederten Stützrädern können die Ausschnitte kleiner ausgebildet sein, gerade so, dass das Stützrad frei in die Ausschnitte hinein und wieder hinaus schwenken kann.

### Bezugszeichenliste

- 10: Niederhubfahrzeug
- 12: Antriebsteil
- 14: Lastteil
- 16a, b: Gabelzinken
- 18a, b: Gabel spitzen
- 20a, b: Lastrollen
- 22: Fahrerstandplattform
- 24: Griffelemente
- 26: Bedienelement
- 28: Antriebsrad
- 30: Stützrad
- 30a, b: Stützrad
- 32: Koppel schwinge
- 34: Stützrad
- 36: Vorderwand
- 38: Seitenwand
- 40: Seitenwand
- 41: Begrenzungsblech
- 42: Öffnung
- 44: Seitenblech
- 46: Bodenblech
- 48: Rahmen
- 50: Ausschnitt
- 52: Ausschnitt
- 54: Ausschnitt
- 56: Ausschnitt
- 58: Antriebsteil
- 60: klappbare Trittplattform
- 62: Antriebsrad
- 64: Stützrad
- 66: Vorderwand
- 68: Rahmenaußenwand
- 70: Rahmenaußenwand
- 72: Begrenzungsblech
- 74: Öffnung
- 76: Seitenbleche
- 78: Bodenblech
- 80: Halterung
- 82: Halterung
- 84: Querblech
- 86: Ausschnitt
- 88: Ausschnitt
- 90: Stützrad
- 92: Stützrad
- 94: Schürze
- 96: Ausschnitt
- 98: Ausschnitt

## Patentansprüche

1. Flurförderzeug (10) mit einem Antriebsteil (12) und einem Lastteil (14), der ein Lasttragmittel mit mindestens einem Lastrad (20) aufweist, wobei der Antriebsteil (12) einen Fahrzeugrahmen (48) aufweist, in dem ein lenkbares Antriebsrad (28) und mindestens ein Stützrad (30) angeordnet sind, wobei das mindestens eine Stützrad (30) auf der vom Lastteil (14) abgewandten Seite des Antriebsrades (28) angeordnet und als nachlaufendes Rad um eine Hochachse schwenkbar gelagert ist, **dadurch gekennzeichnet, dass** der Fahrzeugrahmen (48) eine mit dem mindestens einem Stützrad (30) korrespondierende Ausnehmung aufweist, wobei das mindestens eine Stützrad (30) bei einem von dem Lastteil (14) fortweisenden Nachlauf durch die Ausnehmung mindestens teilweise vorsteht.

2. Flurförderzeug (10) nach Anspruch 1, **dadurch gekennzeichnet, dass** das mindestens eine Stützrad (30) eine horizontale Drehachse und eine vertikale Schwenkachse aufweist, die um den Nachlauf voneinander beabstandet sind.

3. Flurförderzeug (10) nach Anspruch 1 oder 2, **dadurch gekennzeichnet, dass** der Abstand zwischen vertikaler Schwenkachse und Fahrzeugrahmen (48) kleiner als die Summe aus Nachlauf und halbem Stützraddurchmesser ist.

4. Flurförderzeug (10) nach einem der Ansprüche 1 bis 3, **dadurch gekennzeichnet, dass** zwei Stützräder (30a, 30b) vorgesehen sind, deren Verbindungslinie quer zu Fahrzeuglängsachse steht.

5. Flurförderzeug (10) nach Anspruch 4, **dadurch gekennzeichnet, dass** zwei Ausnehmungen für die beiden Stützräder (30a, 30b) in dem Fahrzeugrahmen (48) vorgesehen sind.

6. Flurförderzeug (10) nach einem der Ansprüche 1 bis 5, **dadurch gekennzeichnet, dass** der Fahrzeugrahmen (48) eine quer zur Fahrzeuglängsrichtung stehendes Begrenzungsblech (41) aufweist, in dem die mindestens eine Ausnehmung vorgesehen ist.

7. Flurförderzeug (10) nach einem der Ansprüche 1 bis 6, **dadurch gekennzeichnet, dass** der Fahrzeugrahmen (48) ein Querblech (84) aufweist, in dem die mindestens eine Ausnehmung vorgesehen ist.

8. Flurförderzeug (10) nach Anspruch 7, **dadurch gekennzeichnet, dass** das Querblech (84) auf der von dem Lastteil (14) fortweisenden Seite des Begrenzungsblechs (41) angeordnet ist und die Ausnehmung durch Querblech (84) und Begrenzungsblech (41) gemeinsam gebildet ist.

9. Flurförderzeug (10) nach Anspruch 6, **dadurch gekennzeichnet, dass** das Begrenzungsblech (41) aufrecht in dem Fahrzeugrahmen (48) steht und eine bodennahe untere Kante aufweist.

10. Flurförderzeug (10) nach einem der Ansprüche 6 bis 9, **dadurch gekennzeichnet, dass** der Antriebsteil (12) eine um eine horizontale Achse klappbare Trittplattform (60) aufweist, wobei das Begrenzungsblech (41) das zur Trittplattform (60) weisende Ende des Fahrzeugrahmens (48) bildet.

11. Flurförderzeug (10) nach einem der Ansprüche 6 bis 9, **dadurch gekennzeichnet, dass** der Antriebsteil (12) eine Fahrerstandfläche aufweist, wobei das Begrenzungsblech (41) in dem Fahrzeugrahmen (48) an dem zum Lastteil (14) weisenden Ende der Fahrerstandplattform (22) angeordnet ist.

12. Flurförderzeug (10) nach einem der Ansprüche 1 bis 11, **dadurch gekennzeichnet, dass** das mindestens eine Stützrad (30a, 30b) als eine Bockrolle ausgebildet ist.

13. Flurförderzeug nach einem der Ansprüche 1 bis 12, **dadurch gekennzeichnet, dass** genau ein Stützrad (30) vorgesehen ist.

14. Flurförderzeug nach einem der Ansprüche 1 bis 12, **dadurch gekennzeichnet, dass** ein Paar von Stützrädern (30a, 30b) vorgesehen ist.

15. Flurförderzeug nach Anspruch 14, **dadurch gekennzeichnet, dass** die Stützräder (30a, 30b) an einer Koppelschwinge (32) angeordnet sind.
